# EUROPÄISCHE PATENTANMELDUNG

(11) **EP 3 693 856 A1**
(43) Veröffentlichungstag der Anmeldung: **12.08.2020**
(21) Anmeldenummer: 19156405.3
(22) Anmeldetag: 11.02.2019
(51) Int. Cl.: G06F 9/54

(54) **VERFAHREN ZUM ÜBERTRAGEN EINER NACHRICHT IN EINEM RECHENSYSTEM SOWIE RECHENSYSTEM**

(71) Anmelder: Siemens Aktiengesellschaft, 80333 München (DE)
(72) Erfinder: Graf, Rene, 90513 Zirndorf (DE)

(57) **Zusammenfassung**

Die Erfindung betrifft ein Verfahren zum Übertragen einer Nachricht in einem Rechensystem (1) mit den Schritten: Senden der Nachricht mit einem Sender (S), wobei zum Senden der Nachricht mittels des Senders (S) Daten in einen Speicherbereich (2) einer Mehrzahl von Speicherbereichen (2) geschrieben werden, und Empfangen der Nachricht mit einem Empfänger (E), wobei zum Empfangen der Nachricht die Daten mittels des Empfängers (E) in dem Speicherbereich gelesen werden, wobei dem Sender (S) zum Senden ein Zugriff auf den Speicherbereich (2) erteilt wird, dem Sender (S) nach dem Senden der Zugriff auf den Speicherbereich (2) entzogen wird und anschließend dem Empfänger (E) zum Empfangen der Zugriff auf den Speicherbereich (2) erteilt wird.

## Beschreibung

Die vorliegende Erfindung betrifft ein Verfahren zum Übertragen einer Nachricht in einem Rechensystem. Das Verfahren umfasst das Senden der Nachricht mit einem Sender, wobei zum Senden der Nachricht mittels des Senders Daten in einen Speicherbereich einer Mehrzahl von Speicherbereichen geschrieben werden. Des Weiteren umfasst das Verfahren das Empfangen der Nachricht mit einem Empfänger, wobei zum Empfangen der Nachricht die Daten mittels des Empfängers in dem Speicherbereich gelesen werden. Zudem betrifft die vorliegende Erfindung ein Rechensystem. Außerdem betrifft die Erfindung ein Computerprogramm sowie ein computerlesbares Medium.

In Rechensystemen mit mehreren Ausführungsebenen kommunizieren die einzelnen Software-Einheiten, beispielsweise Tasks, sehr oft über Nachrichten (engl. Messages) miteinander, um Ereignisse und Daten auszutauschen. In den Rechensystemen unterscheidet man hierbei zwei Arten der Orchestrierung mehrerer Tasks, die auch in gemischter Form auftreten können, nämlich Threads und Prozesse. Threads (Handlungsfäden) laufen dabei innerhalb eines Adressraums, der als Prozess bezeichnet wird. Innerhalb eines Prozesses sehen damit alle Threads den identischen Speicher. Zwischen zwei Prozessen hingegen gibt es zunächst keinen gemeinsamen Speicher, so dass die gleiche (virtuelle) Speicheradresse in verschiedenen Prozessen auf verschiedene Bereiche im physikalischen Speicher verweist. Die zwei beschriebenen Orchestrierungsmöglichkeiten haben auch zwei unterschiedliche Möglichkeiten des Nachrichten-Austauschs zur Folge.

Aus dem Stand der Technik ist die Intra-Prozess-Kommunikation bekannt. Hier sehen innerhalb eines Prozesses alle Threads den gleichen Speicher, so dass eine Nachricht zwischen Sender und Empfänger nicht kopiert werden muss, sondern nur der Pointer (virtuelle Speicheradresse) auf diese verschickt werden muss, damit der Empfänger auf den Inhalt zugreifen kann. Der große Vorteil hierbei ist sowohl die hohe Geschwindigkeit des Datenaustauschs, da nur wenige Bytes verschickt werden müssen, als auch die Deterministik des Versandes, da dieser nicht von der Größe der
Nachricht abhängt. Demgegenüber steht aber der große Nachteil, dass der Speicher der Nachricht und somit die Integrität deren Inhaltes nicht geschützt ist. Der Sender kann nach dem Senden schreibend auf diesen Speicher zugreifen und den Inhalt verändern. Der Empfänger hat keine Möglichkeit, diese Veränderung gegenüber dem Zeitpunkt des Abschickens zu erkennen.

Des Weiteren ist die Inter-Prozess-Kommunikation bekannt. Bei der Kommunikation mittels Nachrichten zwischen Prozessen muss diese hingegen aufgrund der disjunkten Adressbereichen immer kopiert werden. Dazu stellt der Nachrichtenmechanismus des Betriebssystems entsprechende Speicherbereich in diesem zur Verfügung, so dass beim Senden die Nachricht zunächst vom Speicher des Senders in den Speicher des Systems kopiert werden muss. Nach der Zustellung muss diese Nachricht wiederum vom Systemspeicher in den Speicher des Empfängers kopiert werden. Neben dieser doppelten Zeitverzögerung hat die Methode den weiteren Nachteil, dass die Anzahl der zur Verfügung stehenden Speicherblöcke im System nicht ausreichen kann, so dass der Sender blockiert, weil er die Nachricht nicht kopieren kann. Eine nachträgliche Erhöhung der Blockanzahl ist nicht möglich. Außerdem ist die Zeitspanne des Kopierens abhängig von der Länge der Nachricht und somit nicht deterministisch. Der große Vorteil dieses kopierenden Nachrichtenmechanismus ist dafür die volle Gewährleistung der Integrität der Nachricht, da diese nach dem Senden nicht mehr verändert werden kann.

Die Inter-Prozess-Kommunikation ist aufgrund des doppelten Kopierens des Nachrichtenspeichers zum einen ohnehin deutlich langsamer als das Kopieren eines Pointers. Zum anderen ist das Kopieren auch abhängig von der Länge der Nachricht und somit nur mit der doppelten Worst-Case-Zeit der durch die Größe der System-Speicherbereiche definierten maximalen Kopierzeit nach oben abschätzbar. Das Versenden eines Pointers hingegen dauert immer exakt gleich lange dauert und ist somit vollkommen deterministisch. Damit eignet sich die Intra-Prozesskommunikation auch für die Verwendung in einem Echtzeit-System, während die Inter-Prozess-Kommunikation nur für Nicht-Echtzeit-Systeme beziehungsweise Nicht-Echtzeit-Tasks (auch innerhalb eines Echtzeit-Systems) in Frage kommt.

Außerdem ist aus dem Stand der Technik die Container-Virtualisierung bekannt. Container zur Isolierung unterschiedlicher Tasks basieren ebenfalls auf Prozessen, bieten aber weitere Möglichkeiten zur Einschränkung des Ressourcenverbrauchs wie beispielsweise Rechenleistung oder maximaler verfügbarer Speicher. Aktuell werden Container vorwiegend in Rechensystemen eingesetzt, weil sie deutlich leichtgewichtiger sind als virtuelle Maschinen, aber mit zunehmendem Einfluss des Internet-of-Things (IoT) kommt die Container-Technologie auch in Geräte, die nicht Teil eines Rechnerverbundes sind. Speziell im Bereich der Automatisierung treffen die Paradigmen Container (Isolation unterschiedlicher Tasks) und Echtzeit (deterministisches Zeitverhalten zur Kontrolle eines physischen Vorgangs) aufeinander.

In einem System mit Container-Virtualisierung kann nur die oben beschriebene Inter-Prozess-Kommunikation eingesetzt werden, da das Basissystem die Container speichertechnisch voneinander isoliert. Dementsprechend kommen alle Nachteile dieses Nachrichtenaustausches voll zum Tragen, vor allem die höhere und nicht deterministische Laufzeit. Daher können nur Nicht-Echtzeit-Tasks in Containern voneinander isoliert werden, während die Echtzeit-Tasks untereinander nicht isoliert werden können, ohne das Zeitverhalten massiv negativ zu beeinflussen. Da es heute keine Lösung für die deterministische Kommunikation zwischen Containern gibt, kann diese Technologie nicht in Automatisierungsgeräten oder sonstigen Echtzeit-Systemen eingesetzt werden.

Es ist Aufgabe der vorliegenden Erfindung, eine Lösung aufzuzeigen, wie die Nachrichtenübertragung in einem Rechensystem zuverlässiger erfolgen kann.

Diese Aufgabe wird erfindungsgemäß durch ein Verfahren, durch ein Rechensystem, durch ein Computerprogramm sowie durch ein computerlesbares (Speicher)medium mit den Merkmalen gemäß den unabhängigen Ansprüchen gelöst. Vorteilhafte Weiterbildungen sind in den anhängigen Ansprüchen angegeben.

Ein erfindungsgemäßes Verfahren dient zum Übertragen einer Nachricht in einem Rechensystem. Das Verfahren umfasst das Senden der Nachricht mit einem Sender, wobei zum Senden der Nachricht mittels des Senders Daten in einen Speicherbereich einer Mehrzahl von Speicherbereichen geschrieben werden. Des Weiteren umfasst das Verfahren das Empfangen der Nachricht mit einem Empfänger, wobei zum Empfangen der Nachricht die Daten mittels des Empfängers in dem Speicherbereich gelesen werden. Hierbei ist vorgesehen, dass dem Sender zum Senden ein Zugriff auf den Speicherbereich erteilt wird. Ferner wird dem Sender nach dem Senden der Zugriff auf den Speicherbereich entzogen. Anschließend wird dem Empfänger zum Empfangen der Zugriff auf den Speicherbereich erteilt.

Mit dem Verfahren soll eine Nachricht beziehungsweise Daten von einem Sender zu einem Empfänger übertragen werden. Bei dem Sender und Empfänger kann es sich um einen Task, einen Prozess oder um einen Container handeln. Bei dem Verfahren handelt es sich insbesondere um ein computerimplementiertes Verfahren, welches auf einem Rechensystem ausgeführt wird. Das Rechensystem kann ein Computer oder ein anderer Rechner sein. Das Rechensystem kann auch Teils eines Automatisierungsgeräts sein, welches beispielsweise in der Automatisierung und/oder Fertigung eingesetzt werden kann.

Zum Übertragen der Nachricht wird ein Speicherbereich verwendet. Dieser Speicherbereich kann seitenweise beziehungsweise als sogenannte Page bereitgestellt werden. Pro Nachricht wird eine solche Page verwendet, um die Daten darin abzulegen. Jeder Prozess oder Task kann sowohl Sender als auch Empfänger für solche Nachrichten sein. Als ersten Schritt kann sich der Sender einen Speicherbereich von einem Basissystem holen, um anschließend seine Daten hinein zu schreiben. Mit dem Senden der Nachricht wird dem Sender der Zugriff auf diesen Speicherbereich wieder entzogen und dem Empfänger übergeben. Damit kann implizit sichergestellt werden, dass der Sender den Speicherbereich der Nachricht nach dem Senden nicht mehr verändern kann, was für eine vollständige Integrität der Nachricht sorgt. Auch eine versehentliche Verwendung des Speichers durch einen Programmierfehler ist ausgeschlossen, da jeder Zugriff auf den Speicher zu einer Ausnahmebehandlung führt, weil der Prozess auf eine für ihn ungültige, ohne physischen Speicher belegte virtuelle Adresse zugreift.

Erfindungsgemäß wird also ein Nachrichtenmechanismus breitgestellt, der die entscheidenden Vorteile der Intra-Prozess-Kommunikation und der Inter-Prozess-Kommunikation in sich vereint, ohne deren Nachteile aufzuweisen. Mit anderen Worten kann also volle Integrität der Nachricht bei gleichzeitig schnellem und deterministischem Versand erreicht werden. Ein Hauptaspekt dieser Erfindung liegt in der Kombination der deterministischen Zustellung, die bislang nur bei der Intra-Prozess-Kommunikation möglich war, mit der vollen Integrität der Nachricht, da keine nachträgliche Veränderung des Inhaltes nach dem Senden weder beabsichtigt noch versehentlich möglich ist.

Bevorzugt wird dem Sender für den Zugriff auf den Speicherbereich eine erste virtuelle Adresse zugewiesen und dem Empfänger wird für den Zugriff auf den Speicherbereich eine zweite virtuelle Adresse zugewiesen, wobei sich die erste virtuelle Adresse von der zweiten virtuellen Adresse unterscheidet. Der physische Speicher der Nachricht kann bei dem Empfänger an einer anderen virtuellen Adresse erscheinen als bei dem Sender. Dabei kann der Empfänger die für ihn richtige Adresse vom Basissystem erhalten. Nach dem Lesen der Nachricht kann der Empfänger den Speicherbereich entweder an das Basissystem zurückgeben oder kann diesen zum Versenden einer anderen Nachricht direkt weiterverwenden. Durch den Wechsel der virtuellen Adresse ist selbst bei der Verwendung dieses Mechanismus zum Nachrichtenaustausch innerhalb eines Prozesses die Integrität der Nachricht gewährleistet, da der Sender die neue virtuelle Adresse nicht kennen und somit nicht zugreifen kann. Damit ermöglicht dieses Verfahren zum NachrichtenAustausch die Separation verschiedener Tasks eines Echtzeit-Systems in unterschiedliche Prozesse (Adressbereiche), um diese gegeneinander zu schützen. Dies ist vor allem bei der Konsolidierung mehrere Applikationen auf einem Gerät von Bedeutung, um unbekannte Abhängigkeiten zu vermeiden.

In einer Ausführungsform wird die Mehrzahl von Speicherbereichen mittels einer Speicherverwaltungseinheit zur Verfügung gestellt, wobei die jeweiligen Speicherbereiche eine vorbestimmte Speichergröße aufweisen. Die Speicherverwaltungseinheit kann auch als MMU (Memory-Management-Unit) bezeichnet werden. Moderne Rechensysteme, auch Automatisierungsgeräte, weisen üblicherweise eine MMU auf, die im Wesentlichen die logische Zuordnung des physikalisch vorhandenen Hauptspeichers auf virtuelle Adressen vornimmt, so dass unterschiedliche Software-Einheiten wahlweise gleiche oder unterschiedliche Sichten auf den Speicher haben. Zwei (oder mehr) Prozesse können auch Zugriff auf den gleichen physikalischen Speicher haben, der aber dann auch unter unterschiedlichen Adressen in den jeweiligen Prozessen erscheinen kann. Die Speicherverwaltungseinheit kann den physikalischen Speicher generell seitenweise (Page) den jeweiligen Prozessen zur Verfügung stellen. Die Seitengröße (Pagesize) beträgt typischerweise vier Kilobyte (4096 Byte), wobei manche Prozessorsysteme auch andere Seitengrößen, teilweise sogar gleichzeitig zulassen.

Es kann ferner vorgesehen sein, dass ein sogenannter Pool (oft auch Memory-Pool) verwendet wird. Als Pool wird eine Methode der Speicherverwaltung bezeichnet, bei der während der Initialisierung des Systems eine bestimmte Anzahl von gleich großen Speicherblöcken allokiert wird und in diesem Pool gespeichert wird. Die Bereitstellung eines Speicherbereichs aus diesem Pool hingegen ist vollkommen deterministisch, da diese in der Regel in einer internen Liste verwaltet werden und somit immer nur das erste Element dieser Liste aus dieser genommen werden muss.

In einer weiteren Ausführungsform unterscheidet sich die Speichergröße von zumindest einigen der Mehrzahl von Speicherbereichen. Um Speicherblöcke beziehungsweise Speicherbereiche mit unterschiedlicher Größe zu verwalten, können mehrere Pools beziehungsweise Message-Pools angelegt werden. Beispielsweise kann pro Speichergröße ein Pool angelegt werden, so dass sich der Sender gezielt an einen der Pools wenden kann, um einen Speicherbereich in der geforderten Größe zu bekommen. Beispielsweise kann das Basissystem in der Initialisierung des Gesamtsystems eine definierte Anzahl an Speicherbereichen allokieren. Wenn der Prozessor verschiedene MMU-Pagesizes beziehungsweise Speicherbereiche mit unterschiedlicher Speichergröße parallel unterstützt, können auch Pools mit verschiedenen Größen angelegt werden, die aber jeweils immer einer definierten Seitengröße der MMU entsprechen.

Weiterhin ist vorteilhaft, wenn die Mehrzahl von Speicherbereichen für das Übertragen der Nachricht allokiert wird. Zum Senden kann ein neuer Speicherbereich beziehungsweise eine neue Page vom System geholt werden, um sie als Sendepuffer verwenden zu können. Die Laufzeit dieser Funktion ist nicht deterministisch. Die Speicherallokation ist selbst in einem Echtzeit-System ein nicht deterministischer Vorgang, da er von dem aktuellen System- und Speicherzustand abhängt und somit nur mit einer maximalen Laufzeit abgeschätzt werden kann, die aber für ein Echtzeit-System zu groß ist.

In einer weiteren Ausführungsform wird die Mehrzahl von Speicherbereichen in einer Nachrichten-Warteschlage bereitgestellt. Eine solche Nachrichten-Warteschlage kann auch als Message-Queue bezeichnet werden. Message-Queues dienen zur Verwaltung der einzelnen Nachrichten. Dabei sind die Queues insbesondere nicht fest einem Task zugeordnet, sondern vom Prinzip her unabhängig. Dass ein bestimmter Task über eine oder mehrere Message-Queues erreichbar ist, wird als Konvention bei der Definition des Systems festgelegt. Ebenso können dem Basissystem selbst eigene Message-Queues zugeordnet werden. Damit dem Sender und/oder Empfänger die Message-Queue für die Verwendung zur Verfügung steht, ist es bevorzugt vorgesehen, dass die Message-Queue initialisiert wird. Somit können der Sender und/oder der Empfänger die Message-Queue diese später ansprechen, um zu senden oder zu empfangen.

Weiterhin ist vorteilhaft, wenn der Speicherbereich nach dem Senden mittels des Senders an die Nachrichten-Warteschlage übergeben wird und zum Empfangen ein Inhalt des Speicherbereichs mittels des Empfängers von der Nachrichten-Warteschlage entnommen wird. Nach dem Senden kann der Speicherbereich beziehungsweise der Sendepuffer der Message-Queue übergeben werden, so dass ein anderer Task diesen aus der Message-Queue nehmen kann. Diese Funktion kann nie blockieren, da es keine Obergrenze gibt, wie viele Sendepuffer beziehungsweise Speicherbereiche in einer Message-Queue liegen können, bevor diese gelesen wird.

Bei Empfangen kann sich folgende Situation ergeben: Ein Task beziehungsweise der Empfänger will den ersten Puffer einer Message-Queue entnehmen. Ist die Message-Queue leer, blockiert der Task, bis ein Puffer von einem anderen Task in die Queue gesendet wird. Damit die Blockade nicht ewig dauert, kann die Empfangsfunktion auch einen Timeout oder eine Try-Option anbieten, so dass die Blockade nur eine bestimmte Zeit dauert beziehungsweise nie eintritt. Im Fall des Zurückkehrens der Funktion ohne einen Puffer kann ein entsprechender Fehlercode zurückgegeben werden.

Falls der Sender die Nachricht versenden möchte, benötigt er dazu einen dieser Blöcke beziehungsweise Speicherbereiche. Hierzu kann der Sender eine Empfangsfunktion angewendet auf die Pool-Message-Queue aufrufen und erhält einen Block zur weiteren Verwendung. Sind keine freien Blöcke im System mehr vorhanden, greifen die beschriebenen Mechanismen, dass der Task wahlweise nicht, für eine begrenzte Zeit oder dauerhaft blockiert.

In einer weiteren Ausführungsform wird der Speicherbereich nach dem Empfangen freigegeben. Nach dem Empfangen kann der Speicherbereich dem System und damit dem allgemeinen Systemspeicher zurückgegeben werden. Diese Laufzeit dieser Funktion ist nicht deterministisch. Ein nicht mehr benötigter Speicherbereich kann an die Pool-Message-Queue gesendet werden, so dass dieser anderen Tasks wieder zur Verfügung steht. Es kann ferner vorgesehen sein, dass die Nachrichten-Warteschlange beziehungsweise Message-Queue wieder aus dem System entfernt wird. Darin vorhandene Puffer können entweder implizit freigegeben werden oder das Entfernen wird abgelehnt, sofern noch Puffer drin sind. Ein Task, der auf dieser Queue auf Puffer wartet, kann aufgeweckt werden und kann mit dem Fehlercode für keine neue Nachricht zurückkommen.

Die obigen Funktionen zum Allokieren und/oder Freigeben können bei der vollständigen Nutzung von Nachrichten-Pools entfallen, wobei die Initialisierungsfunktion dann implizit eine definierte Anzahl Puffer allokiert, und die Entfernenfunktion diese implizit freigibt. Bei Bedarf kann ein Nachallokieren zur Laufzeit möglich sein.

In einer weiteren Ausgestaltung werden als Sender und/oder Empfänger ein Task, ein Prozess und/oder eine Applikation in einem Container verwendet. Als Sender kann also ein Sende-Task und als Empfänger ein Empfangs-Task verwendet werden. Das Verfahren kann also für die Intra-Prozess-Kommunikation verwendet werden. Als Sender kann auch ein Sende-Prozess und als Empfänger kann ein Empfangs-Prozess verwendet werden. Das Verfahren kann also für die Inter-Prozess-Kommunikation verwendet werden. Zudem können Container als Sender und Empfänger verwendet werden. Der Nachrichtenmechanismus kann vom Basissystem bereitgestellt, auf das sowohl einfache Prozesse als auch Container zugreifen können. Des Weiteren ermöglicht dieses Verfahren auch die deterministische Kommunikation zwischen in Containern isolierten Applikationen, was bislang nicht möglich war. Damit können Container zum Applikationsmanagement in Echtzeit-Systemen verwendet werden. Selbst bei der Nutzung nur eines einzigen Prozesses oder Container und der Abbildung der einzelnen Tasks auf Threads innerhalb dessen, bleibt neben dem Determinismus auch die volle Integrität erhalten, da der Empfänger-Thread den physikalischen Speicher des Nachrichtenpuffers unter einer anderen virtuellen Adresse präsentiert bekommt.

Durch Verwendung dieses Verfahrens entfällt auch die Notwendigkeit, dass der Sender wissen muss, ob der Empfänger im gleichen oder in einem anderen Prozess läuft, da keine verschiedenen Nachrichten-Verfahren für diese Fälle mehr existieren, sondern nur noch ein einziges, welches alle Kombinationen abdeckt.

Das Verfahren unterscheidet sich insbesondere von Verfahren, bei welchen die Nutzung eines gemeinsamen Speichers (shared memory) zwischen den Prozessen und die Verwaltung dessen über Semaphoren oder andere Synchronisationsmittel vorgesehen ist. Auch hier wäre die Möglichkeit gegeben, nur den Pointer auf den Nachrichteninhalt in dem gemeinsamen Speicher zu versenden. Der Pointer müsste aber applikativ korrigiert werden, da der gemeinsame Speicher nicht in jedem Prozess an der gleichen virtuellen Adresse liegen muss. Des Weiteren ist auch das Versenden eines Pointers zwischen Prozessen durch das Verfahren des doppelten Kopierens weder schnell noch zwingend deterministisch. Die Sicherstellung der Integrität kann ebenfalls nur applikativ erfolgen, während das erfindungsgemäße beschriebene Verfahren diese implizit als Systemleistung ohne Laufzeitverzögerung mitbringt.

Ein erfindungsgemäßes Rechensystem ist zum Durchführen eines erfindungsgemäßen Verfahrens und der vorteilhaften Ausgestaltungen davon ausgebildet. Neben klassischen Betriebssystemen kann dieses Verfahren vorteilhaft auch in Micro-Kernel-Systemen verwendet werden, bei denen nahezu alle Teile des Systems in eigenen Prozessen laufen, was zwar die Sicherheit massiv erhöht hat, aber speziell beim Nachrichtenaustausch bislang zu einer deutlichen Verlangsamung geführt hat. Daher mussten Echtzeit-Tasks in solchen Systemen bisher zwangsweise im gleichen Prozess laufen, um den Determinismus zu gewährleisten.

Ein erfindungsgemäßes Computerprogramm umfasst Befehle, die bei der Ausführung des Programms durch ein Rechensystem dieses veranlasst, das erfindungsgemäße Verfahren und deren vorteilhafte Ausgestaltungen auszuführen. Ein erfindungsgemäßes computerlesbares (Speicher)medium umfasst Befehle, die bei der Ausführung durch ein Rechensystem dieses veranlasst, das erfindungsgemäße Verfahren und deren vorteilhafte Ausgestaltungen auszuführen.

Die mit Bezug auf das erfindungsgemäße Verfahren vorgestellten bevorzugten Ausführungsformen und deren Vorteile gelten entsprechend für das erfindungsgemäße Rechensystem, für das erfindungsgemäße Computerprogramm sowie für das erfindungsgemäße computerlesbare (Speicher)medium.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: in einer schematischen Darstellung ein Rechensystem, mittels welchem eine Intra-Prozess-Kommunikation gemäß dem Stand der Technik durchgeführt wird;
- FIG 2: in einer schematischen Darstellung ein Rechensystem, mittels welchem eine Inter-Prozess-Kommunikation gemäß dem Stand der Technik durchgeführt wird;
- FIG 3: in einer schematischen Darstellung ein Rechensystem gemäß einer ersten Ausführungsform, bei welchem eine Nachricht zwischen zwei Prozessen übertragen wird; und
- FIG 4: in einer schematischen Darstellung ein Rechensystem gemäß einer zweiten Ausführungsform, bei welchem eine Nachricht innerhalb eines Prozesses übertragen wird.

In den Figuren werden gleiche oder funktionsgleiche Elemente mit den gleichen Bezugszeichen versehen.

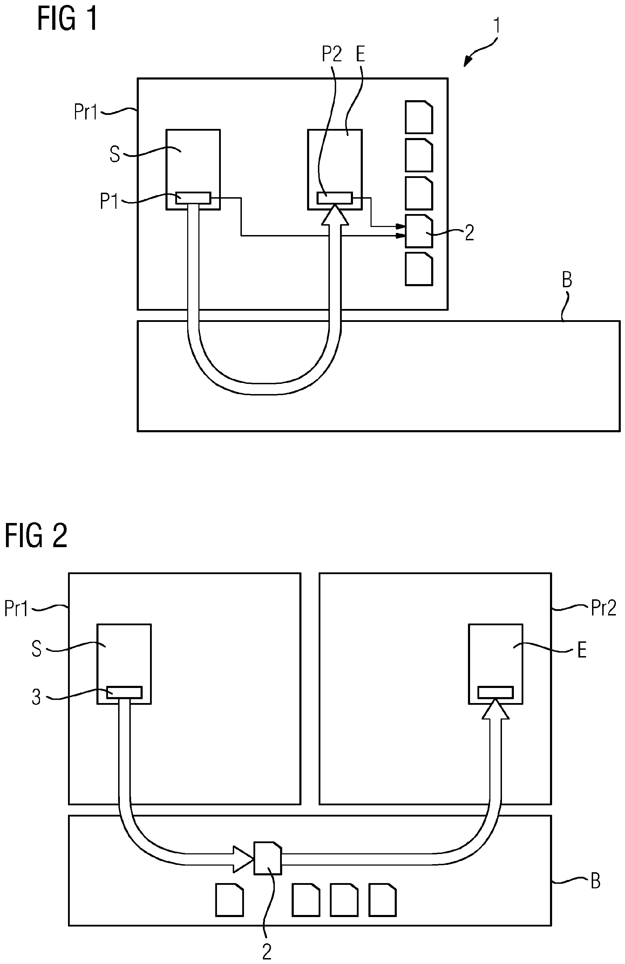

FIG 1 zeigt in einer schematischen Darstellung ein Rechensystem 1, mittels welchem eine Intra-Prozess-Kommunikation gemäß dem Stand der Technik durchgeführt wird. Dabei sollen Nachrichten innerhalb eines Prozesses Pr1 übertragen werden. Dabei sollen Daten von einem Sender S in Form eines Sende-Tasks an einen Empfänger E in Form eines Empfangs-Tasks übertragen werden. Das Senden und Empfangen wird von einem Basissystem B durchgeführt. Innerhalb des Prozesses Pr1 haben sowohl der Sender S als auch der Empfänger E jeweils einen Zugriff auf Speicherbereiche 2 eines Speichers. Hierbei ist es nicht erforderlich, dass die Nachricht beziehungsweise Daten kopiert werden. Hier ist es ausreichend, wenn jeweilige virtuelle Speicheradressen P1, P2 beziehungsweise Pointer übertragen werden. Vorliegend weisen der Sender S und der Empfänger E identische Speicheradressen P1, P2 auf. Der Vorteil bei der Intra-Prozess-Kommunikation ist die hohe Geschwindigkeit des Datenaustauschs, als auch die Deterministik des Versandes, da dieser nicht von der Größe der Nachricht abhängt. Demgegenüber steht aber der große Nachteil, dass der Speicherbereich 2 der Nachricht und somit die Integrität deren Inhalts nicht geschützt ist.

Im Vergleich hierzu zeigt FIG 2 in einer schematischen Darstellung ein Rechensystem 1, mittels welchem eine Inter-Prozess-Kommunikation gemäß dem Stand der Technik durchgeführt wird. Hierbei wird die Nachricht beziehungsweise Daten 3 von dem Sender S beziehungsweise Sende-Task in einem ersten Prozess Pr1 zu dem Empfänger E beziehungsweise Empfangs-Task in einem zweiten Prozess Pr2 übertragen. Hier ist es erforderlich, dass die zu übertragenden Daten kopiert werden. Hierzu stellt das Basissystem B die Speicherbereiche 2 bereit. Zudem Senden werden die Daten 3 von einem Speicher des Senders S in den Speicherbereich 2 kopiert. Zum Empfangen werden die Daten 3 wiederum von dem Speicherbereich 2 in einen Speicher des Empfängers E kopiert. Neben dieser zweifachen Zeitverzögerung hat die Inter-Prozess-Kommunikation den weiteren Nachteil, dass die Anzahl der zur Verfügung stehenden Speicherbereiche 2 im System nicht ausreichen kann, so dass der Sender S blockiert, weil er die Daten 3 nicht kopieren kann. Der Vorteil der Inter-Prozess-Kommunikation ist die volle Gewährleistung der Integrität der Nachricht, da diese nach dem Senden nicht mehr verändert werden kann.

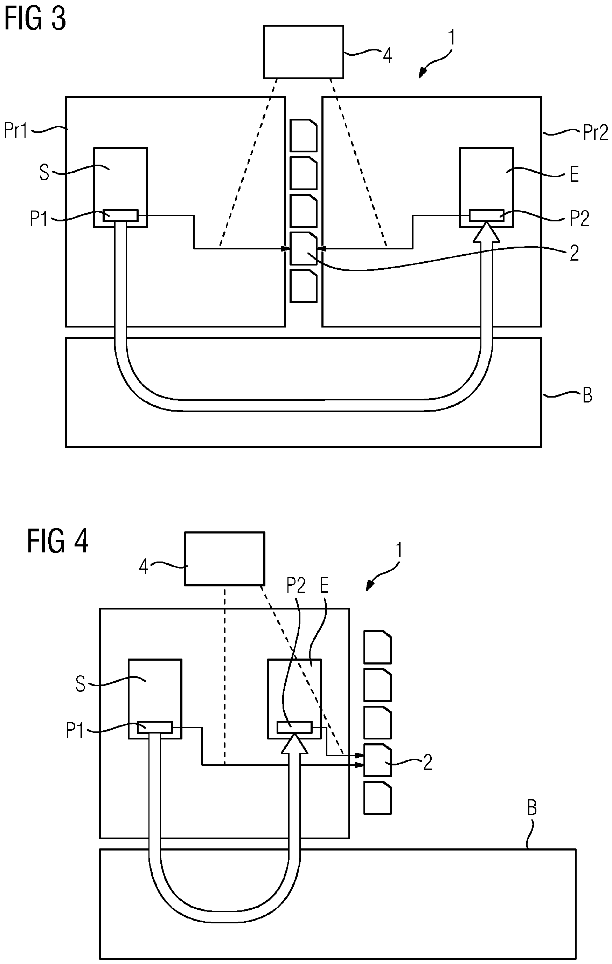

FIG 3 zeigt ein Rechensystem 1 gemäß einer ersten Ausführungsform in einer schematischen Darstellung. Hier wird eine Nachricht von dem Sender S in dem ersten Prozess Pr1 zu dem Empfänger E in dem zweiten Prozess Pr2 übertragen. Hier umfasst das Rechensystem 1 zudem eine Speicherverwaltungseinheit 4, welche auch als MMU (Memory-Management-Unit) bezeichnet werden kann. Die Speicherverwaltungseinheit 4 nimmt die logische Zuordnung des physikalisch vorhandenen Hauptspeichers auf virtuelle Adressen vor. Mittels der Speicherverwaltungseinheit 4 können die Speicherbereiche 2 als Seite oder Page mit einer Speichergröße von beispielsweise vier Kilobyte bereitgestellt werden.

Zudem Senden der Nachricht holt sich der Sender S einen Speicherbereich 2 von dem Basissystem B, um die Daten hinein zu schreiben. Mit dem Senden der Nachricht wird dem Sender S per MMU-Konfiguration der Zugriff auf diese Page wieder entzogen und dem Empfänger E übergeben. Damit kann der Sender S den Speicherbereich 2 nach dem Senden nicht mehr verändern. Zudem unterscheiden sich die virtuellen Adressen P1, P2 für den Sender S und den Empfänger E voneinander. Der Empfänger E kann die virtuelle Adresse P2 vom Basissystem B erhalten.

Das Verfahren kann auch für die Nachrichtenübertragung in einem einzigen Prozess Pr1 verwendet werden. Dies ist in FIG 4 veranschaulicht, welche eine schematische Darstellung eines Rechensystems 1 gemäß einer weiteren Ausführungsform zeigt. Durch die unterschiedlichen virtuellen Adressen P1, P2 ist beim Nachrichtenaustausch innerhalb des Prozesses Pr1 die Integrität der Nachricht gewährleistet.

Um die Nachrichten verwalten zu können, werden Nachrichten-Warteschlangen (Message-Queues) verwendet. Die Message-Queue wird zunächst initialisiert. Des Weiteren wird die Allokation durchgeführt. Hier wird ein Speicherbereich 2 bereitgestellt, der zum Senden der Nachricht verwendet werden kann. Die Laufzeit dieser Funktion ist nicht deterministisch. Hierbei können auch sogenannte Pools oder Memory-Pools verwendet werden. Dabei wird während der Initialisierung des Systems eine bestimmte Anzahl von gleich großen Speicherbereichen 2 allokiert und in diesem Pool gespeichert. Die Bereitstellung eines Speicherbereichs aus diesem Pool ist deterministisch.

Zum Senden kann der Speicherbereich 2 mittels des Senders S an die Message-Queue übergeben werden. Diese Funktion kann nie blockieren, da es keine Obergrenze gibt, wie viele Sendepuffer in einer Message-Queue liegen können, bevor diese gelesen wird. Zum Empfangen kann der Empfänger E den Speicherbereich 2 aus der Message-Queue entnehmen. Ist die Message-Queue leer, blockiert der Task, bis ein Puffer von einem anderen Task in die Queue gesendet wird. Bei der Empfangsfunktion auch ein Timeout oder eine Try-Option verwendet werden, so dass die Blockade nur eine bestimmte Zeit dauert beziehungsweise nie eintritt. Danach kann der Speicherbereich 2 freigegeben werden. Diese Laufzeit dieser Funktion ist nicht deterministisch. Schließlich kann die Message-Queue wieder aus dem System entfernt werden.

Mit dem Verfahren kann sowohl bei der Nachrichtenübertragung innerhalb eines Prozesses Pr1 als auch bei der Nachrichtenübertragung zwischen Prozessen Pr1, Pr2 einerseits die volle Nachrichten-Integrität und andererseits die deterministische Zustellung realisiert werden.

## Patentansprüche

1. Verfahren zum Übertragen einer Nachricht in einem Rechensystem (1) mit den Schritten
- Senden der Nachricht mit einem Sender (S), wobei zum Senden der Nachricht mittels des Senders (S) Daten in einen Speicherbereich (2) einer Mehrzahl von Speicherbereichen (2) geschrieben werden, und
- Empfangen der Nachricht mit einem Empfänger (E), wobei zum Empfangen der Nachricht die Daten mittels des Empfängers (E) in dem Speicherbereich gelesen werden, **dadurch gekennzeichnet, dass**
- dem Sender (S) zum Senden ein Zugriff auf den Speicherbereich (2) erteilt wird,
- dem Sender (S) nach dem Senden der Zugriff auf den Speicherbereich (2) entzogen wird und
- anschließend dem Empfänger (E) zum Empfangen der Zugriff auf den Speicherbereich (2) erteilt wird.

2. Verfahren nach Anspruch 1, **dadurch gekennzeichnet, dass** dem Sender (S) für den Zugriff auf den Speicherbereich (2) eine erste virtuelle Adresse (P1) zugewiesen wird und dem Empfänger (E) für den Zugriff auf den Speicherbereich (2) eine zweite virtuelle Adresse (P2) zugewiesen wird, wobei sich die erste virtuelle Adresse (P1) von der zweiten virtuellen Adresse (P2) unterscheidet.

3. Verfahren nach Anspruch 1 oder 2, **dadurch gekennzeichnet, dass** die Mehrzahl von Speicherbereichen (2) mittels einer Speicherverwaltungseinheit (4) zur Verfügung gestellt wird, wobei die jeweiligen Speicherbereiche (2) eine vorbestimmte Speichergröße aufweisen.

4. Verfahren nach Anspruch 3, **dadurch gekennzeichnet, dass** sich die Speichergröße von zumindest einigen der Mehrzahl von Speicherbereichen (2) unterscheidet.

5. Verfahren nach einem der vorhergehenden Ansprüche, **dadurch gekennzeichnet, dass** die Mehrzahl von Speicherbereichen (2) für das Übertragen der Nachricht allokiert werden.

6. Verfahren nach einem der vorhergehenden Ansprüche, **dadurch gekennzeichnet, dass** die Mehrzahl von Speicherbereichen (2) in einer Nachrichten-Warteschlage bereitgestellt werden.

7. Verfahren nach Anspruch 6, **dadurch gekennzeichnet, dass** der Speicherbereich (2) nach dem Senden mittels des Senders (S) an die Nachrichten-Warteschlage übergeben wird und zum Empfangen ein Inhalt des Speicherbereichs mittels des Empfängers (E) von der Nachrichten-Warteschlage entnommen wird.

8. Verfahren nach einem der vorhergehenden Ansprüche, **dadurch gekennzeichnet, dass** der Speicherbereich (2) nach dem Empfangen freigegeben wird.

9. Verfahren nach einem der vorhergehenden Ansprüche, **dadurch gekennzeichnet, dass** als Sender (S) und/oder Empfänger (E) ein Task, ein Prozess (Pr1, Pr2) und/oder eine Applikation in einem Container verwendet werden.

10. Rechensystem (1) welches zum Durchführen eines Verfahrens nach einem der vorhergehenden Ansprüche ausgebildet ist.

11. Computerprogramm, umfassend Befehle, die bei der Ausführung des Programms durch ein Rechensystem (1) dieses veranlassen, das Verfahren nach einem der Ansprüche 1 bis 9 auszuführen.

12. Computerlesbares (Speicher)medium umfassend Befehle, die bei der Ausführung durch ein Rechensystem (1) dieses veranlassen, das Verfahren nach einem der Ansprüche 1 bis 9 auszuführen.
